Europäisches Patentamt

European Patent Office

Office européen des brevets

(19)

(11) Veröffentlichungsnummer: **0 241 794 B1**

# (12) EUROPÄISCHE PATENTSCHRIFT

(45) Veröffentlichungstag der Patentschrift: 08.01.92

(51) Int. Cl.5: **B23B 51/12**

(21) Anmeldenummer: 87104652.0

(22) Anmeldetag: 30.03.87

Die Akte enthält technische Angaben, die nach
dem Eingang der Anmeldung eingereicht wurden
und die nicht in dieser Patentschrift enthalten sind.

(54) Bohrwerkzeug mit einer Verbindungskupplung zur Übertragung von Drehantriebskräften.

(30) Priorität: 15.04.86 DE 3612648
03.05.86 DE 8612180 U
02.07.86 DE 8617711 U

(43) Veröffentlichungstag der Anmeldung:
21.10.87 Patentblatt 87/43

(45) Bekanntmachung des Hinweises auf die
Patenterteilung:
08.01.92 Patentblatt 92/02

(84) Benannte Vertragsstaaten:
AT BE CH DE ES FR GB GR IT LI LU NL SE

(56) Entgegenhaltungen:
EP-A- 0 103 291        DE-A- 3 335 074
DE-B- 2 624 370        DE-C- 550 209
DE-C- 670 370          US-A- 2 840 027

weralit katalog 1968, seite 34

(73) Patentinhaber: Eischeid, Karl
Schulweg 23
W-5250 Engelskirchen(DE)

(72) Erfinder: Eischeid, Karl
Schulweg 23
W-5250 Engelskirchen(DE)

(74) Vertreter: Sturies, Herbert et al
Patentanwälte Dr. Ing. Dipl. Phys. Herbert
Sturies Dipl. Ing. Peter Eichler Postfach 20
12 42
W-5600 Wuppertal 2(DE)

**Beschreibung**

Die Erfindung bezieht sich auf ein Bohrwerkzeug mit einer Verbindungskupplung zur Übertragung von Drehantriebskräften, für elektromotorische Handbohr- od.dgl. Maschinen, mit einem ersten Kupplungsteil, das ein mit ihm starr verbundenes Kupplungsstück aufweist, welches begrenzte Achsverlagerungen des ersten Kupplungsteils gestattend ballig ausgebildet und verdrehformschlüssig in Axialbohrkraftübertragungen erlaubender Weise mit einem weiteren Kupplungsteil verbunden ist, das mindestens einen die relativen Achsverlagerungen begrenzenden Radialvorsprung aufweist und damit das Kupplungsstück des ersten Kupplungsteils im Sinne einer axialformschlüssigen gelenkigen Verbindung hintergreift und an das ein radial auslenkbarer Bohrer angeschlossen ist.

Bei einer bekannten Verbindungskupplung ist das erste Kupplungsteil ein Schraubendreher für Schrauben mit Innensechskant und hat an seinem dem Handgriff gegenüberliegenden Ende ein einstückiges kugeliges Kupplungsstück. Mit diesem Kupplungsstück greift der Schraubendreher in einen Innensechskant einer Schraube verdrehformschlüssig ein, die das weitere Kupplungsteil der oben genannten Verbindungskupplung ist. Der Schraubendreher kann auch dann angewendet werden, wenn seine Achse einen Winkel zu der Schraubenachse bildet. Diese bekannte Verbindungskupplung gestattet also begrenzte Achswinkelverlagerungen. Sie muß ihrer Natur nach häufig und schnell herzustellen sein und ist daher im Prinzip eine Steckverbindung. Eine derartige Steckverbindung ist jedoch für elektromotorischen Maschinenantrieb nicht geeignet, weil sie leicht lösbar ist, was zu einer leichten Trennbarkeit der beiden Kupplungsteile führt. Eine derartige leichte Trennbarkeit ist offensichtlich unerwünscht, insbesondere aber im Hinblick auf Axialkraftübertragung. Denn wird die Antriebsmaschine nach einem Lösen der Verbindungskupplung, welches vom Anmelder nicht bemerkt wurde, wieder axial beaufschlagt, so kommt es zum Unfall.

Aus der EP-A-0 103 291 ist ein Bohrwerkzeug mit den eingangs genannten Merkmalen bekannt, bei dem der verdrehformschlüssige Eingriff zwischen dem Kupplungsstück und dem weiteren Kupplungsteil mittels eines Mitnehmerstiftes des Kupplungsteils erfolgt, der in eine Axialnut des Kupplungsstücks verdrehformschlüssig eingreift. Außerdem ist das Kupplungsstück von seiner Drehachse aus nur in radialer Richtung ballig, nicht jedoch in axialer Richtung, in der es einen ebenen Boden aufweist, der mit einer Kippkante und einer Abschrägung versehen ist, so daß das Kupplungsstück mit einer Druckvorrichtung um die Kippkante gekippt werden kann. Infolgedessen ist bei dem bekannten Bohrwerkzeug nur eine einzige, in einer einzigen Bohrachsebene erfolgende Verkippung bzw. Achsverlagerung des Kupplungsteils möglich. Infolgedessen muß eine Entgratnut des bekannten Werkzeugs von diesem Bohrwerkzeug mit einer einzigen ganz bestimmten Einspannstellung eingespannt werden, die auf die verdrehformschlüssige Eingriffsstellung bzw. die Schwenkbewegung des Kupplungsstücks zum weiteren Kupplungsteil abgestimmt ist. Desweiteren ist bei dem bekannten Bohrwerkzeug eine Übertragung von Axialantriebskräften zugleich mit Drehantriebskräften nicht vorgesehen; denn zuerst wird eine Bohrung im Werkstück hergestellt, bei der das Kupplungsstück und damit der Bohrer nicht verschwenkt ist, und danach wird der Bohrer in eine Entgratstellung gebracht, aus der heraus der Bohrer lediglich verschwenkt, nicht aber axial bewegt wird.

Aus der DE-A-33 35 074 ist ein Bohrwerkzeug zur Herstellung von Hinterschneidungen in Wänden bekannt, dessen Bohrer starr an einen Einspannschaft angeschlossen ist, der in das Futter einer motorisch antreibbaren Bohrmaschine einspannbar ist. Am dem Einspannschaft gegenüberliegenden Ende besitzt das Bohrwerkzeug eine Seitenschneide und außerdem ist das Bohrwerkzeug mit einer Führungshülse versehen, um die Hinterschneidung durch kreisförmig pendelnde Bewegungen der Maschine herstellen zu können, wobei sich die Seitenschneide in die Wand einfräst. Ein Ruhighalten der Bohrmaschine ist bei diesem Bohrwerkzeug nicht möglich.

Dem Bekannten gegenüber liegt der Erfindung die Aufgabe zugrunde, ein Bohrwerkzeug mit relativen Achsverlagerungen seiner Kupplungsteile so zu verbessern, daß es zum Herstellen von Hinterschnittbohrungen große Drehantriebskräfte und zugleich auch große Axialkräfte zu übertragen erlaubt, wie sie bei elektromotorischen Handbohr-, Schlagbohr- oder Hammerbohrmaschinen auftreten.

Diese Aufgabe wird dadurch gelöst, daß das motorisch angetriebene Kupplungsstück im Querschnitt mehrkantig ist, daß die über das ballige Kupplungsstück miteinander verbundenen Kupplungsteile Achsverlagerungen in allen Bohrachsebenen erlauben und daß der radial auslenkbare Bohrer eine Seitenschneide aufweist und am dieser gegenüberliegenden Außenumfang in einem das Einführen des mit der Seitenschneide versehenen Bohrers in eine Vorbohrung gestattenden Maße abgeflacht ist.

Für die Erfindung ist wesentlich, daß das Kupplungsstück im Querschnitt mehrkantig ist, wodurch eine große Belastbarkeit gegen Radialkräfte erreicht wird, wenn das Kupplungsteil im übrigen stabil ausgebildet ist. Für die Erfindung ist desweiteren wesentlich, daß es die gelenkige Verbindung

der Kupplungteile erlaubt, daß diese Kupplungsteile Achsverlagerungen in allen Bohrachsebenen durchführen und zugleich auch Axialkraftübertragungen erlauben. Eine derartige gelenkige Verbindung ist nicht bekannt. Die Achsverlagerungen des Kupplungsstücks in allen Bohrachsebenen sind insbesondere von Vorteil, wenn Bohrer verwendet werden, deren Seitenschneide durch axiale Beaufschlagung von dem Druckstück radial vorgetrieben werden, um eine Hinterschneidung in inhomogenem Werkstoff herzustellen. Dazu kann der Bohrer winkelmäßig beliebig eingespannt und auch winkelmäßig beliebig am Werkstück angesetzt werden, wobei seine Taumelbewegungen durch die Ausgleichswirkung der Kupplung nicht auf die Antriebsmaschine übertragen werden.

Der Radialvorsprung sorgt dafür, daß die beiden Kupplungsteile nicht ungewollt auseinandergezogen werden können. Eine derart gestaltete Verbindungskupplung bildet also eine gute Handhabe, um beispielsweise einen Bohrer mit seiner Antriebsmaschine so zu verbinden, daß letztere in üblicher Weise als eine einzige Handhabungseinheit gemeinsam mit dem Bohrer gehandhabt werden kann, was das Herstellen von Bohrungen erleichtert.

Da die beiden Kupplungsteile begrenzte Achswinkelverlagerungen gestatten, wird dadurch der Einsatzbereich der Antriebsmaschine erweitert. Beispielsweise können innerhalb eines Raumes dicht unter dessen Decke horizontale Bohrungen hergestellt werden, ohne daß dabei die Antriebsmaschine gegen die Decke stößt.

Des weiteren ist von Bedeutung, daß der Radialvorsprung die relativen Winkelverlagerungen begrenzt, also dafür sorgt, daß übermäßige Winkelstellungen der beiden Kupplungsteile zueinander nicht möglich sind. Das ist insbesondere bei hochtourigen Antriebsmaschinen notwendig, um unerwünschte Reaktionen im Gelenkbereich der Verbindungskupplung zu vermeiden, nämlich unerwünschte Reaktionskräfte und übermäßigen Verschleiß.

Der Radialvorsprung ist vorteilhafterweise ein mit dem zugehörigen Kupplungsteil oder einem Bauteil davon einstückiger Ringkragen. Dieser Ringkragen hintergreift das Kupplungsstück des anderen Kupplungsteils, und zwar unterbrechungslos auf seinem gesamten Umfang, so daß eine gleichmäßige Wirkung des Radialvorsprungs über den gesamten Umfang gewährleistet ist. Die Einstückigkeit des Radialvorsprungs mit dem zugehörigen Kupplungsteil oder einem Bauteil davon bedeutet eine Vereinfachung der Verbindungskupplung, verbunden mit einer großen Belastbarkeit gegen Axial- und Radialkräfte, wenn das Kupplungsteil im übrigen genügend stabil ausgebildet ist.

Das Kupplungsstück weist einen größten Durchmesser auf, der den Durchmesser eines sich anschließenden und dem Radialvorsprung benachbarten Zylinderabschnitts des zugehörigen Kupplungsteils übersteigt. Das Kupplungsstück, das zweckmäßigerweise ein Stauchkopf eines Schafts des Kupplungsteils ist, besitzt durch seine ballige Ausgestaltung einerseits die Gelenkfähigkeit, um die erforderlichen relativen Achswinkelverlagerungen zu gestatten, hat andererseits aber auch die erforderliche Stabilität und die notwendigen großen Flächen, um Axialkräfte bei geringer Flächenpressung und damit bei geringem Verschleiß ebenso wie die Drehantriebskräfte übertragen zu können.

In Ausgestaltung der Erfindung weist das eine Kupplungsteil ein Maschinenanschlußende mit zylindrischem und/oder kegeligem Anschlußaußenumfang auf und das andere Kupplungsteil weist ein Gewinde- oder Mehrkantanschluß auf, oder ist ein Bohrerende. Der zylindrische und/oder kegelige Anschlußaußenumfang gewährleistet, daß die Verbindungskupplung mit den üblichen Antriebsmaschinen mechanisch verbunden werden kann. Hierbei ist es natürlich möglich, auf spezielle Anschlußausbildungen Rücksicht zu nehmen, beispielsweise auf Gewindeanschluß, Anschluß mit Nuten od.dgl. Der an dem anderen Kupplungsteil vorhandene Gewinde- oder Mehrkantanschluß gewährleistet den einfachen Anschluß üblicher Bohrer mit Anschlußgewinde oder Mehrkantenden. Hierbei wird unter einem Mehrkantende auch ein Bohrer verstanden, der eine Eingriffsnut aufweist. Wenn das andere Kupplungsteil als Bohrerende ausgebildet ist, vereinfacht sich die aus Verbindungskupplung und Bohrer bestehende Baueinheit, was in gewissen Anwendungsfällen von Vorteil ist, selbst wenn deswegen ein spezieller Bohrer geschaffen werden muß.

In Weiterbildung der Erfindung ist ein Kupplungsteil eine mit Innenmehrkant im Schraubenkopf versehene Schraube, deren Schraubenkopf mit einer den Radialvorsprung aufweisenden Hülse und/oder deren Gewindeschaft mit einer axial vorspringenden Gewindehülse fest verbunden ist. Durch diese Ausgestaltung der Verbindungskupplung wird erreicht, daß einfache, zum Teil handelsübliche Bauteile verwendet werden können, um die Verbindungskupplung herzustellen. Es ist erkannt worden, daß die vorgenannten Bauteile die erforderlichen Festigkeiten aufweisen, wie auch die erforderlichen geringen Abmessungen, um leistungsfähige Verbindungskupplungen mit kleinen Abmessungen herzustellen.

Um den Verschleiß im Eingriffsbereich des einen Kupplungsteils in das weitere Kupplungsteil klein zu halten, ist die Axiallänge des Radialvorsprungs größer, als dessen radialer Überstand über die den Innenmehrkant bildende Ausnehmung und/oder die dem Zylinderabschnitt benachbarte Fläche des Radialvorsprungs ist abgerundet oder abgeschrägt.

Um das mit seinem Kupplungsteil einteilige bzw. einstückige Kupplungsstück in einfacher Weise herstellen zu können, ist das Kupplungsstück ein Stauchkopf eines Schafts des Kupplungsteils.

Das als Bohrerende oder als diesem durchmessergleiches Zwischenstück ausgebildete Kupplungsteil hat einen mit dem Bohrschaft bzw. des Zwischenstücks einstückigen Radialvorsprung, was die Ausbildung der Verbindungskupplung erheblich vereinfacht und auch eine einfache Herstellung ermöglicht, nämlich durch Formen des Radialvorsprungs aus dem Werkstoff des Bohrschafts bzw. des Zwischenstücks. In diesem Sinne ist das als Bohrerende oder als diesem durchmessergleiche Zwischenstück ausgebildete Kupplungsteil im Hintergriffsbereich des Radialvorsprungs ballig verjüngt ausgebildet, so daß es möglich ist, ein Bohrerende bzw. ein zylindrisches Zwischenstück mit zylindrischer Ausnehmung durch Zusammendrükken zu einer das ballige Kupplungsstück umschließenden Ausnehmung bzw. mit einem das kugelige Kupplungsstück hintergreifendem Ringkragen auszubilden.

Um sicherzustellen, daß das Bohrwerkzeug auch in herkömmlicher Weise und ohne Achswinkelverlagerungen zu arbeiten vermag, daß also begrenzte Achswinkelverlagerungen nur bedarfsweise ermöglicht werden, ist ein die beiden Kupplungsteile bei gleichachsiger Anordnung gegen Achswinkelverlagerungen zu Arretieren gestattender Riegel vorhanden.

Es ist von Bedeutung, daß das Bohrwerkzeug einen zu verstellenden Riegel aufweist, mit dem die Verbindungskupplung, je nach Stellung des Riegels, Achswinkelverlagerungen ermöglicht oder nicht. Infolgedessen kann das Bohrwerkzeug auch in herkömmlicher Weise achswinkelverlagerungsfrei betrieben werden und es wird vor allem ermöglicht, in derselben Bohrung sowohl Achswinkelverlagerungen gestattend, als auch achswinkelverlagerungsfrei zu arbeiten, wozu die Bedienungsperson lediglich den leichtzugänglichen Riegel zu verstellen hat. Dadurch wird die Universalität bzw. der Einsatzbereich von Schlagbohr- oder Hammerbohrmaschinen erheblich erweitert. Um von einer Betriebsart zur anderen zu wechseln, also vom Achswinkelverlagerungen gestattenden Betrieb zum achswinkelverlagerungsfreien Betrieb, ist es nicht erforderlich, Verbindungskupplungen auszutauschen bzw. auszubauen, sondern es genügt ihre Arretierung.

In Ausgestaltung der Erfindung ist der Riegel eine auf dem ersten Kupplungsteil längsverschiebliche Buchse, die in der Arretierungsstellung das zweite Kupplungsteil dicht umfassend übergeschoben ist. Infolgedessen wird das zweite Kupplungsteil für Relativbewegungen gegenüber dem ersten Kupplungsteil blockiert, und zwar mit den baulich einfachen Mitteln einer längsverschieblichen Buchse. Eine solche Buchse kann den baulichen Gegebenheiten des Bohrwerkzeuges angepaßt werden, also auch dann zum Einsatz kommen, wenn das Bohrwerkzeug bzw. deren Verbindungskupplung innerhalb einer Vorbohrung des zu bohrenden Werkstoffs angeordnet ist. Um die radiale Vergrößerung des Bohrwerkzeuges klein zu halten, kann die Buchse eine geringe Wandstärke aufweisen und/oder in eine oder mehrere abschnittsweise angeordnete Ausnehmungen des zweiten Kupplungsteils eingreifen.

Um ein sicheres, von unbeabsichtigten Verstellungen des Riegels freies Arbeiten mit dem Bohrwerkzeug zu ermöglichen, ist der Riegel in seiner Arretierstellung und/oder in seiner Freigabestellung mit einer Federraste verrastbar.

In Weiterbildung der Erfindung weist das zweite Kupplungsteil einen Bohrer auf, an dessen Bohrschaftspitze eine radial vorspringende Seitenschneide vorhanden ist. Dieser Bohrer kann beispielsweise gemäß der deutschen Patentanmeldung P 36 20 389.0 gestaltet sein und ermöglicht die Herstellung von Hinterschneidungen in einer zylindrischen Vorbohrung. Bei einer solchen Herstellung kann die Verbindungskupplung des Bohrwerkzeuges vorteilhaft eingesetzt werden, indem sie zunächst Achswinkelverlagerungen gestattend betrieben und danach arretiert wird, um mit dem Bohrer ausschließlich axial weiter zu bohren. Hierdurch kann eine Korrektur oder weitere Ausgestaltung des Hinterschneidungsquerschnitts erreicht werden.

In Weiterbildung der Erfindung läßt die einen maschinellen Antrieb gestattende Verbindungskupplung einen Bewegungsausgleich zwischen einer leicht taumelnden Bohrschaftbewegung eines Hinterschneidungsbohrers und der vornehmlich um die axiale Vorschubachse erfolgenden Rotationsbewegung des ersten Kupplungsteils zu. Infolgedessen kann eine Antriebsmaschine beim Bohren in gewohnter Weise in einer Achse ausgerichtet und gehalten werden, während der Bohrschaft eine von seiner Anfangsstellung ausgehende abnehmende Taumelbewegung vollführt. Wenn die Taumelbewegung aufhört, ist die Hinterschneidung fertiggestellt.

Besonders vorteilhaft ist es, daß die Verbindungskupplung bei in Bohrlage befindlichem Hinterschneidungsbohrer innerhalb der Vorbohrung angeordnet ist. Infolgedessen kann derselbe Hinterschneidungsbohrer für unterschiedlich tiefe Vorbohrungen verwendet werden und es ist möglich, ihn kurz und gedrungen zu halten, was festigkeitsmäßig vorteilhaft ist und Verbiegungen langer Bohrschäfte vermeidet. Es ist in diesem Fall lediglich erforderlich, die mit dem Bohrschaft begrenzt beweglich zu kuppelnde Antriebswelle genügend lang auszubilden, insbesondere genügend lang für alle infragekommenden Vorbohrungstiefen.

Die Erfindung wird anhand von in der Zeichnung dargestellten Ausführungsbeispielen erläutert. Es zeigt:

Fig. 1    einen Axialschnitt durch eine erfindungsgemäße Verbindungskupplung,

Fig. 1a    die Ansicht der Fig. 1 in Richtung A,

Fig. 1b    den Querschnitt längs der Linie I-I der Fig. 1,

Fig. 2    eine Seitenansicht einer weiteren erfindungsgemäßen Verbindungskupplung,

Fig. 3    eine teilweise geschnittene Seitenansicht einer dritten erfindungsgemäßen Ausführungsform,

Fig. 3a    eine Variation gemäß Fig. 3,

Fig. 4    eine mit einem Riegel versehene Verbindungskupplung ähnlich Fig. 1 in schematischer Darstellung,

Fig. 5    eine der Fig. 4 entsprechende Darstellung mit abweichender Riegelstellung,

Fig. 6    eine teilweise geschnittene Seitenansicht einer weiteren erfindungsgemäßen Ausführungsform,

Fig. 6a    den Querschnitt längs der Linie IV-IV der Fig. 6,

Fig. 7    einen Bohrer des Bohrwerkzeuges in einem Werkstoff, in dem eine Hinterschneidung herzustellen ist und

Fig. 8    eine der Fig. 7 ähnliche Darstellung mit einer Verbindungskupplung.

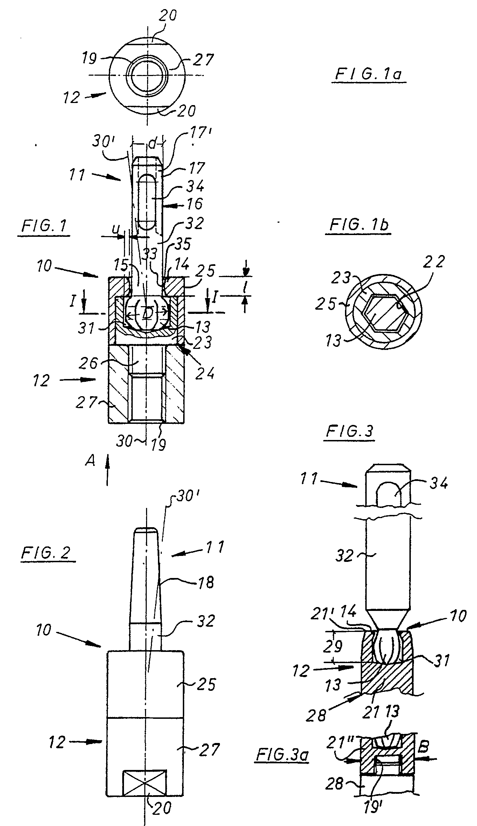

Die in den Figuren 1 bis 7 dargestellten Verbindungskupplungen 10 bestehen jeweils aus einem ersten Kupplungsteil 11 und einem zweiten Kupplungsteil 12. Beispielsweise das Kupplungsteil 11 wird angetrieben, z. B. von einer elektromotorischen Schlagbohrmaschine, während das Kupplungsteil 12 mit einem Bohrer bestückt wird, also z. B. mit einem hartmetallbestückten Schlagbohrer. Die Verbindungskupplung 10 hat infolgedessen Drehantriebskräfte und in Richtung ihrer Drehachse 30 auftretende Axialkräfte zu übertragen. Bei Schlagbohrbetrieb sind die Axialkräfte intermittierend und auch die drehantriebsmäßig zu übertragenden Kräfte sind von den jeweils am Bohrer auftretenden Belastungen abhängig. Diesen maschinellen Belastungen, die auch bei hohen Drehzahlen auftreten, muß die Verbindungskupplung 10 gewachsen sein.

Darüberhinaus muß die Verbindungskupplung 10 so gestaltet sein, daß sie Achswinkelverlagerungen gestattet. Solche Achswinkelverlagerungen treten auf und müssen von der Verbindungskupplung 10 beherrscht bzw. gestattet werden, wenn die Drehachse des Bohrers und die Drehachse der Maschine nicht exakt fluchten. Das ist beispielsweise dann der Fall, wenn das an das Kupplungsteil 12 anzuschließende Bohrwerkzeug aufgrund seiner Konstruktion Taumelbewegungen ausführt, denen die Antriebsmaschine nicht folgen kann und nicht folgen soll, weil sie von dem Bedienenden im wesentlichen in ein und derselben Achslage gehalten wird. Die Figuren 1, 2 zeigen Achswinkeländerungen der jeweiligen Kupplungsteile 11, und zwar in Fig. 1 eine Verlagerung der Achse 30' des Kupplungsteils 11 im Gegenuhrzeigersinn und Fig. 2 eine Verlagerung der Achse 30' des Kupplungsteils 11 im Uhrzeigersinn, jeweils bezogen auf die Darstellungsebene. Achsverlagerungen werden von den Verbindungskupplungen 10 natürlich auch in anderen als der Darstellungsebene gestattet, und zwar nicht nur konstant bleibende Verlagerungen, sondern auch solche, die sich wegen des Betriebs beim Bohren fortwährend ändern.

Die mechanische Verbindung des Kupplungsteils 11 mit dem Kupplungsteil 12 erfolgt über ein Kupplungsstück 13, das starr am Kupplungsteil 11 befestigt ist und in eine hinterschnittene Ausnehmung 31 des Kupplungsteils 12 axial formschlüssig eingreift. Infolge dieser axial formschlüssigen Verbindung wird ausgeschlossen, daß eine zu fällige, z. B. handhabungsbedingte Trennung des Antriebsstrangs von der Antriebsmaschine zum Bohrwerkzeug erfolgt.

Das Kupplungsstück 13 ist ballig ausgebildet und hat einen größten Durchmesser D. Es ist mit einem im wesentlichen zylindrischen Schaft 32 einstückig, der mit einem Zylinderabschnitt 15 in die Ausnehmung 31 des Kupplungsteils 12 eingreift. Der Zylinderabschnitt 15 bzw. der Schaft 32 hat einen Durchmesser d, der kleiner ist, als der Durchmesser D des Kupplungsstücks 13.

Das Kupplungsteil 12 besteht aus mehreren miteinander fest verbundenen Bauteilen. Die Ausnehmung 31 ist im Schraubenkopf 23 einer Schraube 24 angeordnet, deren Schraubenkopf 23 von einer Hülse 25 umgeben ist, und deren Schraubenschaft 26 eine Gewindehülse 27 trägt. Diese drei Hauptbestandteile des Kupplungsteils 12 sind fest miteinander verlötet, beispielsweise durch Hochtemperaturlötung. Die Bauteile des Kupplungsteils 12 bestehen aus Stahl, wie auch das Kupplungsteil 11.

Die Gewindehülse 27 ist länger bemessen, als der Schraubenschaft 26, so daß sie einen Gewindeanschluß 19 bildet, in deren Innengewinde beispielsweise ein mit Anschlußgewinde versehener Bohrer eingeschraubt werden kann. Die Hülse 25 umgibt den Schraubenkopf 23 der Schraube 24 auf seiner gesamten axialen Länge und ragt noch darüber in Richtung des Kupplungsteils 11 hinaus. An diesem überragenden Ende der Hülse 25 ist ein in Richtung auf das Kupplungsteil 11 bzw. den Zylinderabschnitt 15 vorspringender Radialvorsprung 14 vorhanden, der als den Zylinderabschnitt 15 auf dem gesamten Umfang mit gleichem Spiel 35 umgebender Ringkragen ausgebildet ist. Dieser mit der Hülse 25 und damit mit dem Kupplungsteil 12 einstückige Ringkragen vermag das Ausmaß winkelmäßiger Achswinkelverlagerungen zu begrenzen, wenn die Relativverstellung zwischen den Kupplungsteilen 11, 12 so groß ist, daß das zwischen dem Zylinderabschnitt 15 und dem Radialvorsprung 14 bei axialer Ausrichtung der Kupplungsteile 11, 12 vorhandene Spiel 35 nicht mehr vorhanden ist, sich die Kupplungsteile 11, 12 also aneinander abstützen.

Zur Übertragung von Antriebskräften sind die Kupplungsteile 11, 12 formschlüssig miteinander verbunden. Zusätzlich zu der axialen Formschlüssigkeit, die durch das Hintergreifen des kugeligen Kupplungsstucks 13 mit dem Radialvorsprung 14 bewirkt wird, sind die Kupplungsteile 11, 12 verdrehformschlüssig miteinander verbunden. Dies erfolgt durch eine entsprechende querschnittsmäßig formschlüssige Ausgestaltung der Ausnehmung 31 und des Kupplungsstücks 13. Aus Fig. 1b ist ersichtlich, daß das Kupplungsstück 13 einen mehrkantigen Umfang hat, also als Sechskantteil ausgebildet ist. Dementsprechend ist die Ausnehmung 31 des Kupplungsteils 12 eine sechskantige, also ein Innenmehrkant 22. Diese Querschnittsgestaltung von Kupplungsstück 13 und Ausnehmung 31 gewährleistet die Übertragung auch großer und/oder wechselnder Drehantriebskräfte, beispielsweise bei Hammerbohrbetrieb mit Hammerbohrmaschinen.

Wegen der Ausbildung der Ausnehmung 31 als Innensechskant, kann die Schraube 24 eine entsprechende handelsübliche, sogenannte Inbus-Schraube sein.

Die Axiallänge 1 des Radialvorsprungs 14 ist vergleichsweise groß. Sie ist jedenfalls größer, als der radiale Überstand u des Radialvorsprungs 14 über den größten Durchmesser der den Innenmehrkant 22 bildenden Ausnehmung 31. Desweiteren ist die dem Zylinderabschnitt 15 benachbarte Fläche 33 des Radialvorsprungs 14 abgerundet, damit die Verbindungskupplung 10 bei ihrem Drehbetrieb und dabei etwa erfolgenden Achsverlagerungen bzw. Achswinkeländerungen im Bereich des Eingriffs des Kupplungsteils 11 in das Kupplungsteil 12 nicht nennenswert verschleißen kann.

Die Ausgestaltung des Kupplungsstücks 13 als balliges bzw. kugeliges Teil mit den Durchmesser d des Schafts 32 übersteigendem Durchmesser D ermöglicht die Ausbildung des Kupplungsstücks als Stauchkopf des Schafts 32 des Kupplungsteils 11.

Um die Verbindungskupplungen 10 mit jeweils unterschiedlich ausgebildeten maschinen- und bohrerseitigen Anschlüssen gehörig form- und/oder kraftschlüssig kuppeln zu können, sind die Kupplungsteile 11, 12 entsprechend ausgebildet. Das Kupplungsteil 12 in Fig. 1 besitzt den bereits beschriebenen Gewindeanschluß 19. Es könnte in seinem vom Schraubenschaft 26 freien Bereich mit einem Mehrkantanschluß ausgebildet sein. Die Figuren 1 a, 2, 5 zeigen Schlüsselflächen 20 zur Betätigung der Kupplung 10 beim Zusammenbau oder beim Ausbau eines Bohrers.

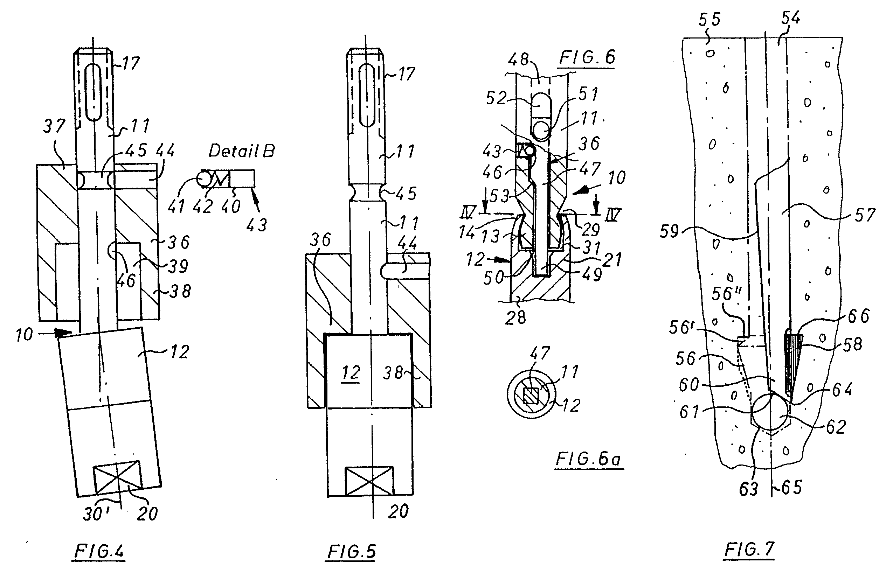

Fig. 3, 6 zeigen das Kupplungsteil 12 als Bohrerende 21, wobei also in den Bohrschaft 28 eines Bohrers eine Ausnehmung 31 eingearbeitet ist, die in ihrer Funktion der Ausnehmung 31 in Fig. 1 entspricht.

Das Kupplungsteil 11 hat ein Maschinenanschlußende 16, das gemäß Fig. 1 mit einem zylindrischen Anschlußaußenumfang 17 versehen ist. In diesen Anschlußaußenumfang 17 ist ein Anschlußgewinde 17' eingearbeitet und es ist auch dargestellt, daß das Maschinenanschlußende 16 mit einer Anschlußnut 34 versehen werden kann, die auch aus Fig. 3, 4, 5 ersichtlich ist. Andere Anschlußnuten, beispielsweise mit offenem Ende und/oder mit trapezförmigem Querschnitt und/oder als Axialverzahnungen sind ebenfalls möglich. Sofern bei der anzuschließenden Maschine die am Kupplungsteil 11 vorhandenen Anschlußmöglichkeiten nicht geeignet sind, ist es möglich, das Kupplungsteil 11 mit kegeligem Anschlußaußenumfang 18 zu versehen, wie Fig. 2 zeigt. Mit diesem kegeligen Anschlußaußenumfang können entsprechende Hohlkegelformen aufweisende Adapter mit der Verbindungskupplung zusammengebaut werden und den Anschluß an eine beliebige Antriebsmaschine ermöglichen.

Bei dem in Fig. 3 dargestellten Direktanschluß eines Bohrers bildet dessen Ende 21 des Bohrschafts 28 ein Kupplungsteil 12, indem das Ende 21 entsprechend verformt wird. Die Ausnehmung 31 wird zunächst zylindrisch hergestellt, wonach der verbleibende Zylinderring im angegebenen Hintergriffsbereich 29 zusammengedrückt wird und so den Radialvorsprung 14 bildet, welcher das Kupplungsstück 13 des Kupplungsteils 11 hintergreift. Es entsteht eine ballige Verjüngung des Bohrerendes 21 im Hintergriffsbereich 29, die es ermöglicht, daß der Bohrer relativ zum Kupplungsteil 11 von dessen Achse abweichende Winkellagen einnimmt, ohne daß die äußerste Kante 21' radial weiter nach außen vorsteht, als der Außenumfang des Bohrerendes 21 auf Höhe des Drehpunkts des Kupplungsstücks 13. Diese Ausgestaltung des Bohrerendes 21 ermöglicht dem Bohrer Taumelbewegungen in einer zylindrischen Vorbohrung, um radiale Hinterschneidungen herzustellen.

Die Verbindungskupplung 10 der Fig. 4, 5 zeigt einen auf dem Kupplungsteil 11 längsverschieblichen Riegel 36, der die Gestalt einer Buchse hat. Der Riegel 36 ist also topfförmig und auf dem Kupplungteil 11 längsverschieblich. Ein Führungsteil 37 des Riegels 36 sorgt für dessen Längsführung auf dem Kupplungsteil 11. Vom Führungsteil 37 in Richtung des Kupplungsteils 12 vorspringend besitzt der Riegel 36 einen Ringkragen 38, der eine Ausnehmung 39 umschließt, in die das benachbarte Ende des Kupplungsteils 12 paßt. Der Zusammenbau des Riegels 36 mit dem Kupplungsteil 12 erfolgt, indem zunächst die Kupplungsteile 11, 12 gemäß Fig. 5 ausgerichtet und danach der Riegel 36 aus der in Fig. 4 dargestellten Stellung in die in Fig. 5 dargestellte Stellung verschoben wird, wobei er das Kupplungsteil 12 außen so umfaßt, daß Achswinkelverlagerungen gegenüber dem Kupplungteil 11 ausgeschlossen werden.

In der Freigabestellung muß der Riegel 36 lagegesichert werden, wozu er eine im Detail B dargestellte Kugelraste 43 aufweist. Diese Kugelraste 43 besteht aus einer zylindrischen Blechhülse 40, in der eine Kugel 41 begrenzt längsverschieblich und über eine Feder 42 innerhalb der Hülse 40 abgestützt ist. Die Kugelraste 43 ist in eine Querbohrung 44 des Riegels 36 eingesetzt und greift in eine Ringnut 45 des Kupplungsteils 11 ein, so daß der Riegel 36 in jeder Winkelstellung gegen axiale Verschiebungen gesichert ist.

Fig. 5 zeigt eine Sicherung des Riegels 36 gegen Längsverschiebungen in der Arretierstellung. Die Kugelraste 43 gemäß Detail B ist weggelassen. Der Eingriff erfolgt in eine halbkugelartige Ausnehmung 46 des Kupplungsteils 11, wobei die Winkelstellung des Riegels 36 relativ zum Kupplungsteil 11 in einfacher Weise dadurch gefunden wird, daß der Riegel 36 in Anlage am Kupplungsteil 12 gedreht wird. Die Rastausnehmung 46 ist nur beispielsweise dargestellt. Es ist natürlich auch möglich, hier eine Ringnut vorzusehen. Auch die Ringnut 45 kann durch eine halbkugelartige Rastausnehmung ersetzt werden.

Der in Fig. 6 dargestellte Riegel 36 ist ein Stift 47, der in einer Längsbohrung 48 des Kupplungsteils 11 begrenzt längsverschieblich ist und mit seinem Ende 49 in eine Ausnehmung 50 des zweiten Kupplungsteils 12 eingreift. Mit einem Querstift 51 kann er aus der Ausnehmung 50 herausgezogen werden, so daß die durch das ballige Kupplungsstück 13 und die Ausnehmung 31 möglichen Relativbewegungen zwischen den Kupplungsteilen 11, 12 möglich werden.

Der Querstift 51 ist innerhalb eines Längsschlitzes 52 des ersten Kupplungsteils 11 längsverschieblich und eine Kugelraste 43 sichert die jeweilige Längsstellung des Stiftes 47. Dieser besitzt hierzu einerseits eine halbkugelige Rastausnehmung 46 sowie eine weitere Rastausnehmung 53, die durch einen Absatz des Stifts 47 gebildet ist.

Der Stift 47 kann einen runden Querschnitt haben oder gemäß Fig. 6a jedenfalls im Längsbereich des Schnittes der Fig. 6a einen mehrkantigen bzw. vierkantigen Querschnitt. In diesem Falle wären die Kupplungsteile 11, 12 zum Arretieren relativ zueinander zu verdrehen, damit das Stiftende 49 die Ausnehmung 50 eingreifen kann, die zur Erleichterung des Eingriffs trichterförmig ausgebildet ist.

Fig. 7 zeigt eine Vorbohrung 54 in einer z.B. aus Beton bestehenden Wand 55. Diese Vorbohrung soll mit einer Hinterschneidung 56 versehen werden, und zwar mittels eines z.B. in den Gewindeanschluß 19 eingeschraubten Bohrers 57 des Bohrwerkzeugs. Der Bohrer 57 besitzt dazu eine Seitenschneide 58 und der dieser Seitenschneide 58 gegenüberliegende Außenumfang 59 des Bohrers 57 ist in einem dessen Einführen in die Vorbohrung 54 gestattenden Maße abgeflacht. Um den Bohrer 57 radial gezielt auslenken zu können, ist die Spitze 60 des Bohrers mit einer Schrägfläche 61 versehen, die sich auf einem kugelförmigen Druckstück 62 axial abstützen kann, welches selbst an der Sohle 63 der Vorbohrung 54 anliegt. Derartige Bohrer, die mit oder ohne Druckstücke arbeiten können, sind in verschiedensten Ausführungsformen in der deutschen Patentanmeldung P 36 20 389.0 dargestellt.

Damit es zu einer Auslenkung des Bohrers in radialer Richtung kommt und damit zu einem radialen Eindringen der Seitenschneide 58 in den Werkstoff, wird der Bohrer 57 mit seiner Schrägfläche 61 auf dem Druckstück 62 abgestützt, wobei die Kante 64 in der Nähe der Achse 65 der Vorbohrung 54 zu liegen kommt. Bei axialem Vortrieb des Bohrers 57 bewegt sich diese Kante 64 rotierend weiter nach außen, wobei auch ein geringer axialer Vorschub erfolgt. Dies bedeutet bei rechtwinkeliger Anordnung des Schneidkantenabschnitts 66, daß die Hinterschneidung nicht rechtwinkelig ist, sondern die in Fig. 7 links dargestellte strichpunktierte Form 56' aufweist. Wäre der Schneidkantenabschnitt 66 mit einer bestimmten Neigung zur Bohrerspitze 60 hin versehen, hätte die Hinterschneidung eine noch größere, als die vorgesehene Neigung.

Mit dem Bohrwerkzeug gemäß der Erfindung bzw. durch Arretierung der beiden Kupplungsteile 11, 12 gemäß Fig. 4, 6 kann das Bohrwerkzeug nunmehr ausschließlich axial beaufschlagt werden. Es ist also möglich, die Hinterschneidung 56 durch axiales Zurückziehen des Bohrers 57 so auszugestalten, daß sich ein zur Längsachse 65 senkrechter Hinterschneidungsabschnitt 56" ergibt. Es ist aber auch möglich, der Hinterschneidung 56 die gepunktet dargestellte oder eine andere beliebige Form zu geben, bei der ein ausschließlich axialer Vorschub des Bohrers 57 erforderlich ist. Ist dieser Vorschub in Richtung der Sohle 63 der Vorbohrung erforderlich, kann nach dem Herstellen der Hinterschneidung in radialer Richtung zunächst das eventuell vorhandene Druckstück 62 entfernt werden und dann eine ausschließlich axiale Nachbearbeitung erfolgen. Mit Hilfe des erfindungsgemäßen Bohrwerkzeugs können also Hinterschneidungen hergestellt werden, für die nacheinander radiale und axiale Bohrvorgänge erforderlich sind.

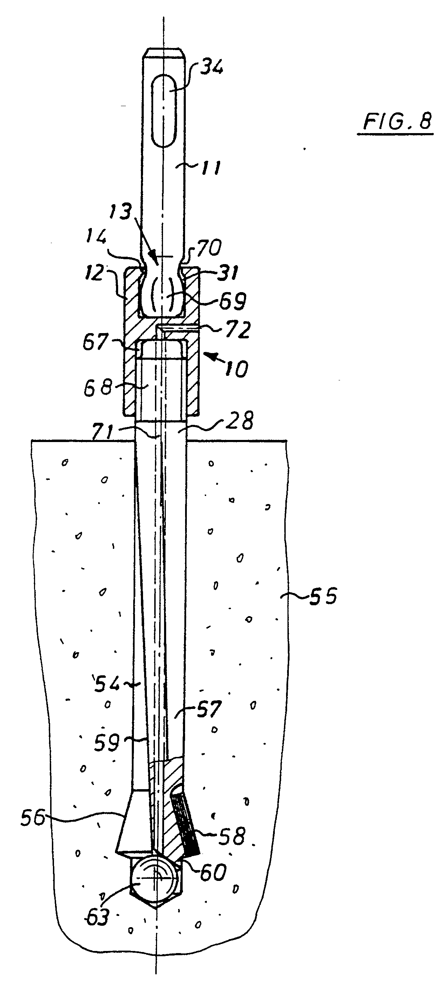

In Fig. 8 hat die Verbindungskupplung 10 ein im Querschnitt H-förmiges Kupplungteil 12, das eine Aufnahmebohrung 67 zur drehfesten Aufnahme des Antriebsanschlusses 68 des Bohrschafts 28 eines Hinterschneidungsbohrers 57 aufweist, nämlich ein Innengewinde in Verbindung mit einer Bohrungsendfläche zur Anlage an der Axialbeaufschlagungsfläche, also der Endfläche des Bohrschafts 28. Des weiteren hat das Kupplungteil 12 eine mit der Aufnahmebohrung 67 gleichachsige entgegengesetzt gerichtete Ausnehmung 31, in die das Kupplungsstück 13 des Kupplungteils 11 gelenkig paßt, dessen mit einer Nut 34 versehenes anderes Ende in eine Aufnahme einer Antriebsmaschine eingebaut werden kann. Die Verbindung zwischen dem Kupplungsstück 13 und dem Kupplungteil 12 erfolgt über einen Sechskant 69 verdrehfest, wobei der Sechskant 69 an seinem Außenumfang axial leicht ballig ausgebildet ist, wodurch die erforderliche begrenzte Schwenkbewegung des Kupplungteils 12 relativ zum Kupplungteil 11 ermöglicht wird. Zum Zusammenhalt der beiden Bauteile greift ein Radialvorsprung 14 des Kupplungteils 12 in eine entsprechende, eine Relativbewegung des Kupplungteils 11 ermöglichende Hinterschneidung 70.

Der Bohrer 57 ist mit einer Luftbohrung 71 versehen, die jeweils von der Spitze 60 bis zum Anschluß 68 längs durchläuft. Diese Luftbohrung 71 gewährleistet ausreichenden Luftzutritt oder ausreichende Luftabfuhr auch dann, wenn die im nichtabgeflachten Außenumfang spiralig angeordneten Bohrstaubfördernutenabschnitte (nicht dargestellt) mit zu förderndem Baustaub vollgesetzt sind und die Anlage des Bohrschafts 57 an der Wand 55 im oberen Bereich der Vorbohrung 54 so dicht ist, daß sonst eine Behinderung des Transports des Bohrstaubs auftreten würde. Die Luftbohrung 71 mündet in eine Bohrung 72 der Kupplung bzw. des Kupplungteils 12. Diese Bohrung 72 ermöglicht Luftzubzw. abfuhr zu- bzw. vom Bohrer 57.

## Patentansprüche

1. Bohrwerkzeug mit einer Verbindungskupplung (10) zur Übertragung von Drehantriebskräften, für elektromotorische Handbohr- od.dgl. Maschinen, mit einem ersten Kupplungteil (11), das ein mit ihm starr verbundenes Kupplungsstück (13) aufweist, welches begrenzte Achsverlagerungen des ersten Kupplungteils (11) gestattend ballig ausgebildet und verdrehformschlüssig in Axialbohrkraftübertragungen erlaubender Weise mit einem weiteren Kupplungsteil (12) verbunden ist, das mindestens einen die relativen Achsverlagerungen begrenzenden Radialvorsprung (14) aufweist und damit das Kupplungsstück (13) des ersten Kupplungteils (11) im Sinne einer axialformschlüssigen gelenkigen Verbindung hintergreift und an das ein radial auslenkbarer Bohrer (57) angeschlossen ist, **dadurch gekennzeichnet,** daß das motorisch angetriebene Kupplungsstück (13) im Querschnitt mehrkantig ist, daß die über das ballige Kupplungsstück (13) miteinander verbundenen Kupplungsteile (11,12) Achsverlagerungen in allen Bohrachsebenen erlauben, und daß der radial auslenkbare Bohrer (57) eine Seitenschneide (58) aufweist und am dieser gegenüberliegenden Außenumfang in einem das Einführen des mit der Seitenschneide (58) versehenen Bohrers (57) in eine Vorbohrung gestattenden Maße abgeflacht ist.

2. Bohrwerkzeug nach Anspruch 1, **dadurch gekennzeichnet,** daß der Radialvorsprung (14) ein mit dem zugehörigen Kupplungsteil (12) oder einem Bauteil davon einstückiger Ringkragen ist.

3. Bohrwerkzeug nach Anspruch 1 oder 2, **dadurch gekennzeichnet,** daß das Kupplungsstück (13) einen größten Durchmesser (D) aufweist, der den Durchmesser (d) eines sich anschließenden und dem Radialvorsprung (14) benachbarten Zylinderabschnitt (15) des zugehörigen Kupplungsteils (11) übersteigt.

4. Bohrwerkzeug nach einem der Ansprüche 1 bis 3, **dadurch gekennzeichnet,** daß das eine Kupplungsteil (11) ein Maschinenanschlußende (16) mit zylindrischem und/oder kegeligem Anschlußaußenumfang (17, 18) aufweist und daß das andere Kupplungsteil (12) einen Gewinde- oder Mehrkantanschluß (19) aufweist, oder ein Bohrerende (21) ist.

5. Bohrwerkzeug nach einem der Ansprüche 1 bis 4, **dadurch gekennzeichnet,** daß ein Kupplungsteil (12) eine mit Innenmehrkant (22) im Schraubenkopf (23) versehene Schraube (24) ist, deren Schraubenkopf (23) mit einer den Radialvorsprung (14) aufweisenden Hülse (25) und deren Gewindeschaft (26) mit einer axial vorspringenden Gewindehülse (27) fest verbunden ist.

6. Bohrwerkzeug nach einem der Ansprüche 1 bis 5, **dadurch gekennzeichnet, daß** die Axiallänge (1) des Radialvorsprungs (14) größer als dessen radialer Überstand (u) über die den Innenmehrkant (22) bildende Ausnehmung (31) ist und/oder daß die dem Zylinderabschnitt (15) benachbarte Fläche (33) des Radialvorsprungs (14) abgerundet oder abgeschrägt ist.

7. Bohrwerkzeug nach einem der Ansprüche 1 bis 6, **dadurch gekennzeichnet, daß** das Kupplungsstück (13) ein Stauchkopf eines Schafts (32) des Kupplungsteils (11) ist.

8. Bohrwerkzeug nach einem der Ansprüche 1 bis 7, **dadurch gekennzeichnet, daß** das als Bohrerende (21) oder als diesem durchmessergleiches Zwischenstück (21″) ausgebildete Kupplungsteil (12) einen mit dem Bohrschaft (281 bzw. dem Zwischenstück (21″) einstückigen Radialvorsprung (14) hat.

9. Bohrwerkzeug nach einem der Ansprüche 1 bis 8, **dadurch gekennzeichnet, daß** das als Bohrerende (21) oder als diesem durchmessergleiches Zwischenstück (21″) ausgebildete Kupplungsteil (12) im Hintergriffsbereich (29) des Radialvorsprungs (14) ballig verjüngt ausgebildet ist.

10. Bohrwerzeug nach einem der Ansprüche 1 bis 9, **dadurch gekennzeichnet, daß** ein die beiden Kupplungsteile (11, 12) bei gleichartiger Anordnung gegen Achswinkelverlagerungen zu arretieren gestattender Riegel (36) vorhanden ist.

11. Bohrwerkzeug nach Anspruch 10, **dadurch gekennzeichnet, daß** der Riegel (36) eine auf dem ersten Kupplungsteil (11) längsverschiebliche Buchse ist, die in der Arretierstellung das zweite Kupplungsteil (12) dicht umfassend übergeschoben ist.

12. Bohrwerkzeug nach einem der Ansprüche 10 oder 11, **dadurch gekennzeichnet, daß** der Riegel (36) in seiner Arretierstellung und/oder in seiner Freigabestellung mit einer Federraste (43) verrastbar ist.

13. Bohrwerkzeug nach einem der Ansprüche 1 bis 12, **dadurch gekennzeichnet, daß** das zweite Kupplungsteil (12) einen Bohrer (57) aufweist, an dessen Bohrschaftspitze (60) eine radial vorspringende Seitenschneide (58) vorhanden ist.

14. Bohrwerkzeug nach einem der Ansprüche 1 bis 13, **dadurch gekennzeichnet, daß** mindestens ein Kupplungsteil (12) einen Luftzu- bzw. -abfuhr zu bzw. vom Bohrer (57) gestattende Bohrung (72) aufweist.

15. Bohrwerkzeug nach einem oder mehreren der Ansprüche 1 bis 14, **dadurch gekennzeichnet, daß** der Bohrer (57) an seiner Spitze (60) eine an einem Druckstück (62) oder direkt an der Sohle (63) der Vorbohrung (54) abstützbare Schrägfläche (61) aufweist.

**Claims**

1. Drilling tool having a connection coupling (10) for transmitting rotary drive forces, for electromotive hand-held drilling machines or the like, having a first coupling part (11), which has a coupling piece (13) which is rigidly connected thereto and which is spherical in form permitting limited axial displacements of the first coupling part (11), and is connected in a torsionally form-locking manner to a further coupling part (12) in a manner permitting the axial transmission of drilling forces, and which has at least one radial projection (14), which limits the relative axial displacements and thus engages behind the coupling piece (13) of the first coupling part (11) in the manner of an axially form-locking articulated connection, and to which a radially deflectable drill (57) is connected, characterised in that the motor-driven coupling piece (13) has a polygonal cross section, the coupling parts (11,12), which are connected to one another by way of the spherical coupling piece (13), permit axial displacements in all axial drilling planes, and the radially deflectable drill (57) has a side cutter (58) and is flattened on the outer periphery lying opposite thereto to a degree which permits the insertion of the drill (57), which is provided with the side cutter (58), into a pilot bore.

2. Drilling tool according to claim 1, characterised in that the radial projection (14) is an annular collar which is in one piece with the associated coupling part (12) or a part thereof.

3. Drilling tool according to claim 1 or 2, characterised in that the coupling piece (13) has a maximum diameter (D) which exceeds the diameter (d) of a contiguous cylindrical portion (15), which is adjacent to the radial projection (14), of the associated coupling part (11).

4. Drilling tool according to one of claims 1 to 3, characterised in that one coupling part (11) has a machine connection end (16) with a cylindrical and/or conical connection outer periphery (17,18), and the other coupling part (12) has a threaded or polygonal connection (19), or is a drill end (21).

5. Drilling tool according to one of claims 1 to 4, characterised in that one coupling part (12) is a screw (24), which is provided in the screw head (23) with a polygon socket (22) and whose screw head (23) is firmly connected to a sleeve (25) having the radial projection (14) and whose threaded shank (26) is firmly connected to an axially projecting threaded sleeve (27).

6. Drilling tool according to one of claims 1 to 5, characterised in that the axial length (1) of the radial projection (14) is greater than its radial projecting length (u) over the recess (31) forming the polygon socket (22) and/or that the face (33) of the radial projection (14) adjacent the cylindrical portion (15) is rounded or chamfered.

7. Drilling tool according to one of claims 1 to 6, characterised in that the coupling piece (13) is a bulging head of a shank (32) of the coupling part (11).

8. Drilling tool according to one of claims 1 to 7, characterised in that the coupling part (12), which is in the form of a drill end (21) or an intermediate piece (21") having the same diameter, has a radial projection (14) which is in one piece with the drilling shank (28) or the intermediate piece (21").

9. Drilling tool according to one of claims 1 to 8, characterised in that the coupling part (12), which is in the form of a drill end (21) or an intermediate part (21") having the same diameter, is spherically tapered in the engaging-behind region (29) of the radial projection (14).

10. Drilling tool according to one of claims 1 to 9, characterised in that a locking member (36) is provided which permits the two coupling parts (11,12) to be locked against axial angular displacements when in identical arrangement.

11. Drilling tool according to claim 10, characterised in that the locking member (36) is a bushing which is longitudinally displaceable on the first coupling part (11) and which, in the locking position, is slipped over the second coupling part (12) so as to closely embrace it.

12. Drilling tool according to one of claims 10 or 11, characterised in that, in its locking position and/or in its release position, the locking member (36) can be locked by a spring catch (43).

13. Drilling tool according to one of claims 1 to 12, characterised in that the second coupling part (12) has a drill (57), on the drilling shank bit (60) of which a radially projecting side cutter (58) is provided.

14. Drilling tool according to one of claims 1 to 13, characterised in that at least one coupling part (12) has a bore (72) which permits air supply to and removal from the drill (57).

15. Drilling tool according to one or more of claims 1 to 14, characterised in that the drill (57) has on its tip (60) an inclined face (61) which can be supported on a pressure piece (62) or directly on the base (63) of the pilot bore (54).

## Revendications

1. Outil de perçage à accouplement (10), pour la transmission de forces motrices en rotation sur des perceuses électriques à main ou des appareils similaires, comportant un premier organe d'accouplement (11) auquel est reliée de façon rigide une pièce d'accouplement (13) qui, pour permettre des déplacements axiaux limités du premier organe d'accouplement (11), a une forme bombée et est reliée, par solidarité de forme par torsion, pour permettre des transmissions de forces de perçage axiales, à un second organe d'accouplement (12) qui possède au moins une partie saillante radiale (14) limitant les déplacements axiaux relatifs, et vient ainsi en contact, par l'arrière, avec la pièce d'accouplement (13) du premier organe d'accouplement (11) pour former une liaison articulée par solidarité de forme axiale, et auquel est relié un foret (57) apte à dévier radialement, caractérisé en ce que la pièce d'accouplement (13) entraînée par un moteur a une section transversale polygonale, en ce que les organes d'accouplement (11, 12) reliés entre eux par la pièce d'accouplement bombée (13) permettent des déplacements axiaux dans tous les plans axiaux de perçage, et en ce que le foret (57) apte à dévier radialement possède une lame latérale (58) et est aplati, sur la périphérie extérieure opposée à celle-ci, de manière à permettre l'introduction du foret (58) pourvu de la lame latérale (58) dans un perçage préalable.

2. Outil de perçage selon la revendication 1, caractérisé en ce que la partie saillante radiale (14) consiste en une collerette annulaire réalisée d'une seule pièce avec l'organe d'accouplement (12) correspondant ou avec une partie de celui-ci.

3. Outil de perçage selon la revendication 1 ou 2, caractérisé en ce que la pièce d'accouplement (13) présente un diamètre maximum (D) supérieur au diamètre (d) d'une section cylindrique (15) de l'organe d'accouplement (11) correspondant, adjacente et voisine de la partie saillante radiale (14).

4. Outil de perçage selon l'une des revendications 1 à 3, caractérisé en ce que le premier organe d'accouplement (11) possède une extrémité de raccordement (16) à la machine à circonférence extérieure de raccordement cylindrique et/ou conique, et en ce que le second organe d'accouplement (12) possède un raccord fileté ou polygonal (19), ou consiste en une extrémité de foret (21).

5. Outil de perçage selon l'une des revendications 1 à 4, caractérisé en ce qu'un organe d'accouplement (12) consiste en une vis (24) dont la tête (23) est pourvue d'un creux à plusieurs pans (22) et est reliée de façon fixe à un manchon (25) présentant la partie saillante radiale (14), tandis que la tige filetée (26) de ladite vis (24) est reliée de façon fixe à un manchon fileté (27) faisant saillie axialement.

6. Outil de perçage selon l'une des revendications 1 à 5, caractérisé en ce que la longueur axiale (1) de la partie saillante radiale (14) est supérieure à sa longueur de saillie radiale (u) par rapport à la cavité (31) formant le creux à plusieurs pans (22) et/ou en ce que la surface (33) de la partie saillante radiale (14) voisine de la section cylindrique (15) est arrondie ou biseautée.

7. Outil de perçage selon l'une des revendications 1 à 6, caractérisé en ce que la pièce d'accouplement (13) consiste en une tête refoulée d'une tige (32) de l'organe d'accouplement (11).

8. Outil de perçage selon l'une des revendications 1 à 7, caractérisé en ce que l'organe d'accouplement (12), conçu comme extrémité de perçage (21) ou comme pièce intermédiaire (21") de même diamètre que celle-ci, possède une partie saillante radiale (14) réalisée d'une seule pièce avec la tige de perçage (28), respectivement avec la pièce intermédiaire (21").

9. Outil de perçage selon l'une des revendications 1 à 8, caractérisé en ce que l'organe d'accouplement (12), conçu comme extrémité de perçage (21) ou comme pièce intermédiaire (21") de même diamètre que celle-ci, a une forme effilée bombée dans la zone de contact (29) avec la partie saillante radiale (14).

10. Outil de perçage selon l'une des revendications 1 à 9, caractérisé en ce qu'il est prévu un verrou (36) qui permet de bloquer les deux organes d'accouplement (11, 12), moyennant un agencement du même type, a l'encontre de déplacements angulaires axiaux.

11. Outil de perçage selon la revendication 10, caractérisé en ce que le verrou (36) consiste en une douille, mobile longitudinalement sur le premier organe d'accouplement (11), que l'on fait glisser, en position de blocage, sur le second organe d'accouplement (12) pour l'enserrer sur celui-ci.

12. Outil de perçage selon l'une des revendications 10 et 11, caractérisé en ce que le verrou (36) est apte à être enclenché dans sa position de blocage et/ou dans sa position de déblocage à l'aide d'un cran d'arrêt élastique (43).

13. Outil de perçage selon l'une des revendications 1 à 12, caractérisé en ce que le second organe d'accouplement (12) possède un foret (57) sur la pointe de tige de perçage (60) duquel est prévue une lame latérale (58) faisant saillie radialement.

14. Outil de perçage selon l'une des revendications 1 à 13, caractérisé en ce qu'au moins un organe d'accouplement (12) possède un perçage (72) permettant une arrivée d'air dans le foret (57) ou une évacuation d'air à partir de celui-ci.

15. Outil de perçage selon l'une au moins des revendications 1 à 14, caractérisé en ce que le foret (57) possède, sur sa pointe (60), une surface oblique (61) apte à s'appuyer sur un élément de pression (62) ou directement sur le fond (63) du perçage préalable (54).

FIG.1a

FIG.1

FIG.1b

FIG.3

FIG.2

FIG.3a

FIG.7

FIG.6

FIG.6a

FIG.5

FIG.4

Detail B

FIG. 8